# EUROPÄISCHE PATENTSCHRIFT

(11) **EP 2 233 992 B1**
(45) Veröffentlichungstag und Bekanntmachung des Hinweises auf die Patenterteilung: **01.03.2017**
(21) Anmeldenummer: 10001826.6
(22) Anmeldetag: 23.02.2010
(51) Int. Cl.: A47L 11/40, H04L 12/40, A47L 9/28, G05B 19/042

(54) **Steuerungseinrichtung für eine portable elektrische Maschine mit einem Kommunikationsbus und Maschine**
Control device for a portable electric machine with a communication bus and machine
Dispositif de commande pour une machine électrique portable dotée d'un bus de communication et machine

(30) Priorität: 27.03.2009 DE 102009014709
(43) Veröffentlichungstag der Anmeldung: 29.09.2010
(73) Patentinhaber: Festool GmbH, 73240 Wendlingen am Neckar (DE)
(72) Erfinder: Maier, Frank, 72622 Nürtingen (DE)
(74) Vertreter: Patentanwälte Bregenzer und Reule Partnerschaftsgesellschaft mbB

(56) Entgegenhaltungen:
- EP-A1- 0 433 965
- EP-A1- 1 538 784
- EP-A2- 0 217 216
- CN-Y- 2 436 267
- DE-A1-102006 060 447
- US-B1- 6 182 172

## Beschreibung

Die Erfindung betrifft eine portable elektrische Maschine, in Gestalt einer Hand-Werkzeugmaschine oder eines Sauggeräts, mit einer Steuerungseinrichtung zur Steuerung mindestens einer Komponente der Maschine, insbesondere eines elektrischen Motors, gemäß dem Oberbegriff des Anspruchs 1.

Eine derartige mit einer Steuerungseinrichtung ausgestattete Hand-Werkzeugmaschine ist in der nicht vorveröffentlichten Patentanmeldung DE 10 2007 048 631 beschrieben. Dort kommuniziert eine Bedieneinrichtung mit einem in einem separaten Antriebsgehäuse angeordneten Antriebsmotor über elektrische Energieversorgungsleitungen, wobei die Bedieneinrichtung Vorgabedaten durch Veränderung der Energieversorgungsspannung bildet. Somit findet eine Art Bus-Übertragung statt.

Soweit dieses elektrische Potential elektrisch isoliert ist, das heißt für einen Bediener nicht zugänglich, ist eine solche Datenübertragung unproblematisch. Das dort vorherrschende elektrische Potential von beispielsweise 110 Volt oder 220 Volt Wechselspannung ist für den Bediener nicht zugänglich, so dass die Gefahr von Verletzungen vermieden ist. Es gibt aber auch elektrische Maschinen, bei denen weitere Potentialbereiche vorhanden sind, beispielsweise für Sensorpotentiale oder dergleichen, mit denen die Steuerungseinrichtung verbunden ist. Bei einem Sauggerät können dies beispielsweise Sensorkontakte zur Erfassung eines Füllstandes in einem Sammelraum des Sauggerätes sein. Diese Sensorkontakte sind frei zugänglich, so dass dort nur ein Berührpotential zulässig ist.

Ein Zweileiterfeldgerät für die Prozessautomatisierungstechnik zum Anschluss mindestens eines Sensorelements mit einer galvanischen Isolationsschaltung ist aus DE 10 2006 060 447 A1 bekannt.

Aus EP 1 538 784 A1 ist ein Umsetzer für ein Installations-Bussystem mit einer galvanischen Trennung bekannt.

Aus EP 0 217 216 A2 ist ein Staubsauger mit einer optoelektrischen Staubkonzentrations-Messanordnung bekannt, die über einen optoelektrisches Kopplungsglied einen Ansteuerkreis für den Antriebsmotor ansteuert.

Davon ausgehend ist es die Aufgabe der vorliegenden Erfindung, eine mit einer Steuerungseinrichtung ausgestattete portable elektrische Maschine bereitzustellen, bei der unterschiedliche Potentialbereiche und eine optimale Kommunikation möglich sind.

Zur Lösung der Aufgabe ist eine portable elektrische Maschine mit einer Steuerungseinrichtung gemäß der technischen Lehre des Anspruchs 1 vorgesehen.

Ein Grundgedanke der Erfindung ist es, die Kommunikation zwischen dem ersten und dem zweiten Potentialbereich - es könnte auch ein dritter oder weiterer Potentialbereich vorhanden sein - über einen Datenbus abzuwickeln, wobei zur galvanischen Trennung zwischen den jeweiligen Potentialbereichen geeignete Übertragungsmittel vorgesehen sind, beispielsweise Optokoppler, magnetische Übertrager oder dergleichen. Somit ist eine Potentialtrennung realisiert. Über den Datenbus kann eine Vielzahl von Informationen zwischen den verschiedenen Potentialbereichen übermittelt werden. Die Anzahl erforderlicher Datenleitungen ist dadurch reduziert.

Eine bevorzugte Ausführungsform der Erfindung sieht vor, dass der Primärbusabschnitt und/oder der Sekundärbusabschnitt als Eindrahtbus ausgestaltet sind. An dieser Stelle sei erwähnt, dass bei Vorhandensein eines weiteren Potentialbereichs entsprechend ein weiterer Busabschnitt zweckmäßig ist, der ebenfalls über galvanisch trennende Übertragungsmittel mit dem ersten oder zweiten Potentialbereich beziehungsweise dem Primärbusabschnitt oder dem Sekundärbusabschnitt verbunden ist.

Der Eindrahtbus ist zweckmäßigerweise für eine bidirektionale Übertragung ausgestaltet. Es ist aber prinzipiell auch möglich, dass auf dem jeweiligen Primärbusabschnitt oder Sekundärbusabschnitt oder einem Teilzweig davon nur gesendet oder empfangen wird. Mithin können also auf Abschnitten des Datenbusses auch unidirektionale Übertragungen auf entsprechenden Teilzweigen realisiert sein.

Der Eindrahtbus hat den Vorteil, dass die Anzahl erforderlicher Leitungen minimiert ist. Es ist lediglich eine einzige Busleitung erforderlich, deren Potential von einem zweiten Potential, beispielsweise Masse oder einem Versorgungspotential, abweicht.

Die Übertragungsmittel weisen zweckmäßigerweise für jede Übertragungsrichtung eine separate Übertragungseinrichtung auf, beispielsweise zwei separate Optokoppler, zwei separate magnetische Übertrager oder dergleichen.

Die erste Übertragungseinrichtung ist vorzugsweise an einem Ausgang und die zweite Übertragungseinrichtung an einem von dem Ausgang separaten Eingang der ersten Kommunikationseinrichtung zur Vermeidung einer Rückkopplung angeschlossen. Es versteht sich, dass zur Vermeidung einer Rückkopplung auch andere Maßnahmen, beispielsweise ein Transistornetzwerk, eine Entkopplung über Operationsverstärker oder dergleichen, vorgesehen sein können.

Die erste Übertragungseinrichtung und die zweite Übertragungseinrichtung sind zweckmäßigerweise auf dem Sekundärbusabschnitt miteinander verbunden. Somit ist also auf Seiten der mindestens einen zweiten Kommunikationseinrichtung beispielsweise eine bidirektionale Übertragung realisiert.

Das erfindungsgemäße Konzept sieht vor, dass an den Datenbus auch weitere Kommunikationseinrichtungen angeschlossen werden können. Diese Kommunikationseinrichtungen können Bestandteil beispielsweise der portablen elektrischen Maschine sein oder auch externe, von der portablen elektrischen Maschine separate Kommunikationseinrichtungen, beispielsweise Anzeigeeinrichtungen, Diagnoseeinrichtungen, Computer oder dergleichen. Die dritte Kommunikationseinrichtung ist also lösbar mit dem Primärbusabschnitt oder dem Sekundärbusabschnitt verbindbar.

Zweckmäßigerweise ist die dritte oder weitere Kommunikationseinrichtung an denjenigen Busabschnitt anschließbar, der eine bidirektionale Übertragung auf ein und derselben Busleitung ermöglicht. Wenn also die erste und zweite Übertragungseinrichtung auf dem Sekundärbusabschnitt miteinander verbunden sind, ist dieser Sekundärbusabschnitt zum Anschluss weiterer Kommunikationseinrichtungen vorteilhaft.

Die erste und/oder die mindestens eine zweite Kommunikationseinrichtung könnten zwar prinzipiell durch Bus-Kommunikationsmodule gebildet sein, die beispielsweise durch einen Mikroprozessor ansteuerbar sind. Vorzugsweise ist jedoch vorgesehen, dass die erste und/oder die zweite Kommunikationseinrichtung unmittelbar durch einen Mikroprozessor gebildet sind. Der Mikroprozessor ist beispielsweise in der Lage, die mindestens eine Komponente der Maschine, beispielsweise einen elektrischen Motor, anzusteuern und zugleich unmittelbar die Kommunikation über den Datenbus zu bewältigen. Der Sensor kann auch zur Verarbeitung mindestens eines Sensorsignals ausgestaltet sein. Es versteht sich, dass eine Arbeitsteilung zweckmäßig ist, dass beispielsweise ein dem ersten Potentialbereich zugeordneter Mikroprozessor zur Ansteuerung der elektrischen Komponente vorgesehen ist, während ein zweiter Mikroprozessor, der dem zweiten Potentialbereich zugeordnet ist, Sensorsignale verarbeitet.

An den Datenbus, beispielsweise den Primärbusabschnitt oder den Sekundärbusabschnitt, ist zweckmäßigerweise ein bidirektional zum Senden und Empfangen vorgesehener Anschluss des Mikroprozessors angeschlossen.

Der Primärbusabschnitt und/oder der Sekundärbusabschnitt sind zweckmäßigerweise als Offene-Kollektor-Busse ausgestaltet. Hier ist also eine einfache Busarchitektur realisiert, die preisgünstig ist.

Der erste Potentialbereich und der zweite Potentialbereich sind vorzugsweise auf einer einzigen Leiterplatte angeordnet. Zweckmäßig ist es dann, wenn die erste Kommunikationseinrichtung, die zweite Kommunikationseinrichtung und/oder die Übertragungsmittel auf derselben, einzigen Leiterplatte angeordnet sind. Es versteht sich, dass man beispielsweise die Übertragungsmittel auch als separate Komponente realisieren könnte.

Die Leiterplatte bildet zweckmäßigerweise einen Bestandteil eines Leiterplattenmoduls, bei der an einer Flachseite eine Leitkörperanordnung mit mindestens einem von der Leiterplatte separaten Leitkörper angeordnet ist. Dieser Leitkörper dient beispielsweise zur Übertragung eines Netzpotentials, das auf der Leiterplatte auf dem ersten oder zweiten Potentialbereich ebenfalls vorhanden ist. Der Leitkörper ist beispielsweise an einer Flachseite angeordnet, die einer Flachseite entgegengesetzt ist, an der elektrische Komponenten, beispielsweise die Kommunikationseinrichtungen und/oder die Übertragungsmittel, angeordnet sind. Der Leitkörper hat zweckmäßigerweise mindestens einen Leiterplatten-Kontaktvorsprung, der die Leiterplatte an einer Kontaktöffnung durchdringt oder in die Leiterplatte eindringt. Dieser Kontaktvorsprung steht vor einen Leitkörper-Verbindungsabschnitt vor, der entlang der Flachseite der Leiterplatte verläuft.

Zwischen dem mindestens einen Leitkörper und der Leiterplatte ist zweckmäßigerweise ein Zwischenkörper angeordnet, der vorzugsweise plattenförmig ist. Auch an einer von der Leiterplatte abgewandten Seite des Leitkörpers ist es vorteilhaft, wenn ein weiterer Körper, beispielsweise ein Bodenkörper, angeordnet ist. Dieser weitere Körper / Bodenkörper ist vorzugsweise plattenförmig oder wannenartig.

Der erste Potentialbereich ist beispielsweise einem Netzpotential eines Wechselspannungsnetzes zugeordnet, während der zweite Potentialbereich einem gegenüber dem Netzkörperpotential niedrigeren Potential zugeordnet ist, zum Beispiel einem Berührpotential, das gefahrlos durch einen Benutzer berührt werden kann.

Die Kommunikationseinrichtungen sind zweckmäßigerweise zu einer konkurrierenden Kommunikation auf dem Datenbus ausgestaltet. Dazu ist es vorteilhaft, wenn die Kommunikationseinrichtung nach einem eine Busnachricht ankündigenden Startsignal eine Wartephase "Warten" aufweist, innerhalb derer eine jeweils andere Kommunikationseinrichtung mit dem Senden einer Busnachricht beginnen kann. Dadurch werden Kollisionen vermieden. Der Wartephase ist vorzugsweise ein Empfangspegel zugeordnet. Mithin sind also die Kommunikationseinrichtungen während der Wartephase auf Empfang geschaltet, so dass eine zweite Kommunikationseinrichtung mit der von ihr gewünschten Kommunikation beginnen kann.

Die Länge einer Wartephase einer Kommunikationseinrichtung hängt zweckmäßigerweise von deren Sende-Priorität ab. Somit ist es möglich, dass eine Kommunikationseinrichtung mit höherer Priorität zu senden beginnt, während eine Kommunikationseinrichtung mit niedrigerer Priorität auf eine Sendemöglichkeit wartet.

Bevorzugt ist es, wenn die Kommunikationseinrichtungen auf dem Datenbus mittels einer einen Takt integral enthaltenden Sendekodierung, beispielsweise einer Manchester-Kodierung, senden. Somit ist eine Art digitale Phasenmodulation realisiert. Die Gleichspannungsanteile sind minimiert, so dass beispielsweise die Verwendung von Übertragern bei dem Datenbus möglich ist.

Die Kommunikationseinrichtungen kommunizieren auf dem Datenbus zweckmäßigerweise Busnachrichten variabler Länge, so dass eine Anpassung an den jeweiligen Sendebedarf ohne weiteres möglich ist.

Nachfolgend wird ein Ausführungsbeispiel der Erfindung anhand der Zeichnung erläutert. Es zeigen:
- Figur 1: eine perspektivische Frontal-Schrägansicht eines Sauggerätes,
- Figur 2: eine Querschnittsansicht des Sauggeräts gemäß Figur 1 etwa entlang einer Schnittlinie A-A in Figur 1,
- Figur 3: eine Draufsicht auf ein erfindungsgemäßes Leiterplattenmodul,

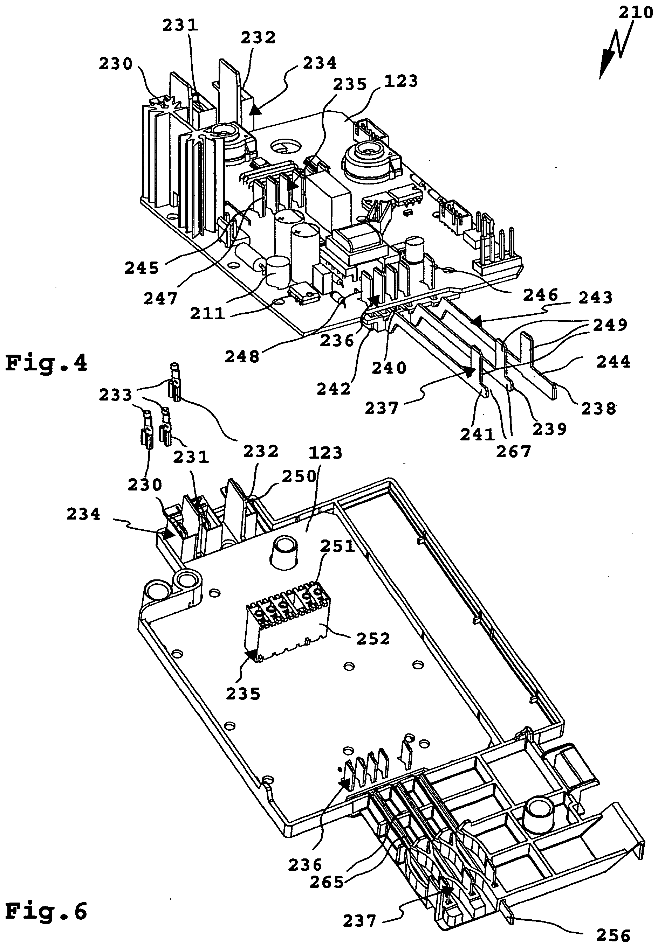

- Figur 4: eine perspektivische Schrägansicht des Leiterplattenmoduls gemäß Figur 3, jedoch ohne einen Bodenkörper,

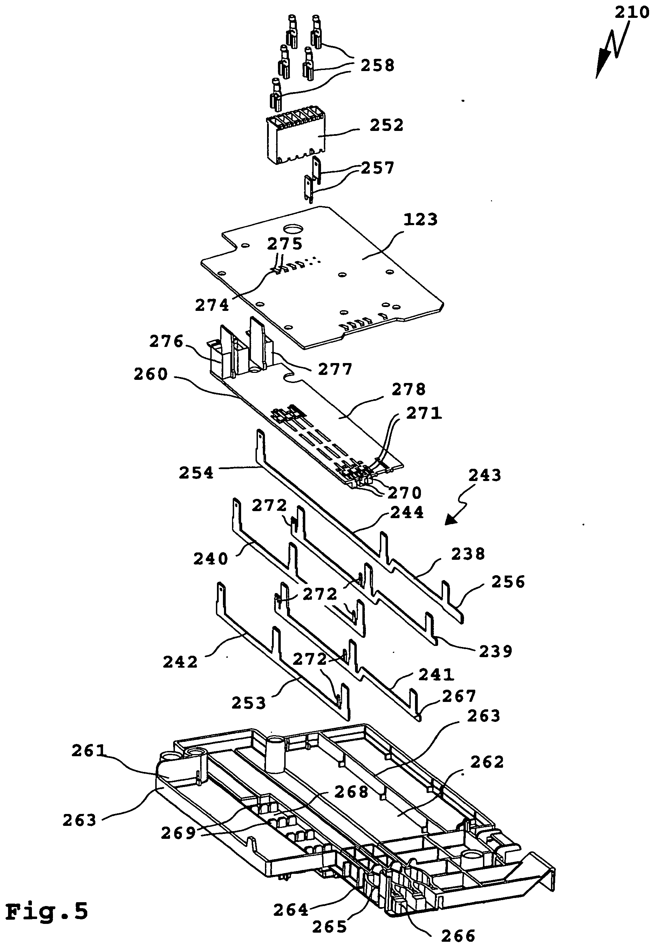

- Figur 5: eine Explosionsdarstellung des Leiterplattenmoduls gemäß Figur 3,
- Figur 6: das Leiterplattenmodul gemäß Figur 3 schräg von oben, allerdings ohne auf der Leiterplatte angeordnete elektrische Komponenten,
- Figur 7: eine Querschnittsansicht des Leiterplattenmoduls gemäß Figur 3 entlang einer Schnittlinie B-B,
- Figur 8: eine Querschnittsansicht des Leiterplattenmoduls gemäß Figur 3 entlang einer Schnittlinie C-C,
- Figur 9: ein Teilschaltbild einer Steuerungseinrichtung des Sauggeräts gemäß Figur 1 und
- Figur 10: eine Busnachricht, die auf einem Bus der Steuerungseinrichtung gemäß Figur 9 übertragen wird.

Im Inneren eines Saugergehäuses 11 eines Sauggeräts 10 ist ein Saugmotor 12 zum Erzeugen eines Saugstroms 13 angeordnet, der über einen Saugeinlass 14 in das Saugergehäuse 11 einsaugbar ist. An den Saugeinlass 14 ist ein nicht dargestellter Schlauch anschließbar. Im Inneren des Saugergehäuses 11 befindet sich ferner eine Filteranordnung 15 zum Absondern von Partikeln aus dem Saugstrom 13.

An einer Oberseite 16 des Saugergehäuses 11 befindet sich eine Aufnahme 17 zur Aufnahme des Saugschlauches und/oder eines Anschlusskabels 18, mit dem das Sauggerät 10 an ein elektrisches Versorgungsnetz mit z.B. 110 Volt oder 230 Volt Wechselstrom anschließbar ist. Alternativ wäre ein Sauggerät mit einem Akkumulator möglich. Das Sauggerät 10 ist ein transportables Sauggerät, an dessen Unterseite Fahrrollen 19, 20 angeordnet sind. Die vorderen Fahrrollen 20 sind Lenkrollen. Weiterhin kann das Sauggerät 10 an einem Tragegriff 21 an der Oberseite 16 ergriffen werden.

Zwischen einer den Saugeinlass 14 aufweisenden Frontwand 22 und der Oberseite 16 des Saugergehäuses 11 erstreckt sich eine Bedienwand 23 mit Bedienelementen 24 zur Bedienung des Sauggeräts 10. Die Bedienwand 23 ist zweckmäßigerweise schräg geneigt, so dass die Bedienelemente 24 von schräg oben vorn leicht bedienbar sind.

Die Bedienelemente 24 umfassen einen Schalter 25, der sozusagen einen Hauptschalter bildet. Mit dem Schalter 25 kann der Saugmotor 12 ein- und ausgeschaltet werden. Ferner ist ein Automatikmodus einstellbar, bei dem der Saugmotor 12 immer dann läuft, wenn ein angeschlossener Verbraucher elektrischen Strom über das Sauggerät 10 erhält, was später noch erläutert wird. Mit Hilfe eines Saugleistungs- oder Drehzahlschalters 26 kann eine Leistung des Saugmotors 12 eingestellt werden. Ein Anpassungsschalter 27 ermöglicht eine elektrische Anpassung des Sauggeräts 10 an einem jeweiligen Saugeinlass 14 angeschlossenen Saugschlauch. Mit einem Reinigungsschalter 28 ist eine Reinigungsfunktion des Sauggeräts 10 einschaltbar und/oder parametrierbar. Eine fest am Sauggerät 10 installierte Steckdose 29 ermöglicht das Einstecken eines elektrischen Energieverbrauchers. Die Steckdose 29 ist mit dem Anschlusskabel 18 elektrisch verbunden.

In einem unteren Teil, einem Sammelgehäuseteil 31, des Saugergehäuses 11 ist ein dem Innenraum 47 oder Sammelraum 110 zum Sammeln von aus dem Saugstrom 13 abgesonderten Partikeln und/oder abgesonderter Feuchtigkeit vorgesehen, in dem optional ein großformatiger Filtersack 48 der Filteranordnung 15 anordenbar ist. Einem zum Saugmotor 12 führenden Saugeinlass 56 ist ein Hauptfilter 61 vorgelagert.

Der Saugstrom 13 wird durch den Saugeinlass 14, an dem ein Saugschlauch 190 anordenbar ist, in den Filtersack 48 eingesaugt. Der Filtersack 48 nimmt im Saugstrom 13 enthaltene Partikel 180 auf. Der Saugstrom 13 wird vom Saugmotor 12 erzeugt, der den Saugstrom 13 über den Hauptfilter 61 durch den Saugeinlass 56 hindurch ansaugt. Der Saugeinlass 56 ist strömungsabseitig, beim Sauggerät 10 oberseitig, des Hauptfilters 61 angeordnet. Der Saugeinlass 56 ist mit einem Turbineneinlass 70 einer Saugturbine 71 eines den Saugmotor 12 enthaltenden Motormoduls 58 über eine Luftführungsanordnung 55 verbunden. Die Saugturbine 71 saugt den Saugstrom 13 durch den Turbineneinlass 70 an und bläst ihn nach radial außen über Schalldämpfer 84, die zugleich optional eine Filterfunktion haben können, hindurch und sodann durch Saugstromauslässe 85 an den Seitenwänden des Saugergehäuses 11 nach außen aus dem Saugergehäuse 11 hinaus.

Ein Kühlluftstrom 94 strömt durch einen Kühllufteinlass 96 an der Frontwand 22 des Saugergehäuses 11 ein. Der Kühlluftstrom 94 strömt zunächst an einer Steuerungseinrichtung 97 des Sauggeräts 10 vorbei und kühlt diese. Über einen zwischen dem Hauptfilter 61 und einer Deckwand 52 des Saugergehäuses 11 verlaufenden Kühlluftkanal 98 strömt der Kühlluftstrom 94 weiter zu einem Motoraufnahmeraum 54 für den Saugmotor 12, in dem der Kühlluftstrom 94 von oben her in einen Kühllufteinlass des Saugmotors 12 einströmt. Der Kühlluftstrom 94 durchströmt den Saugmotor 12 und strömt sodann nach hinten durch einen Kühlluftauslass 99 aus dem Saugergehäuse 11 aus, an dem zweckmäßigerweise ein Schalldämpfer 100 vorgesehen ist.

An einem Saugrohranschluss 133, an den der Saugschlauch 190 anschließbar ist, ist ein Erdungskontakt 137 vorgesehen. Der Erdungskontakt 137 ist als ein Federkontakt, beispielsweise eine Federzunge, ausgestaltet. Der Saugrohranschluss 133, z.B. eine Rohrmuffe, und/oder der Saugschlauch 190 bestehen zweckmäßigerweise aus einem elektrisch leitfähigen Material, insbesondere Kunststoff, insbesondere in einem für den Erdungskontakt 137 vorgesehenen Berührbereich.

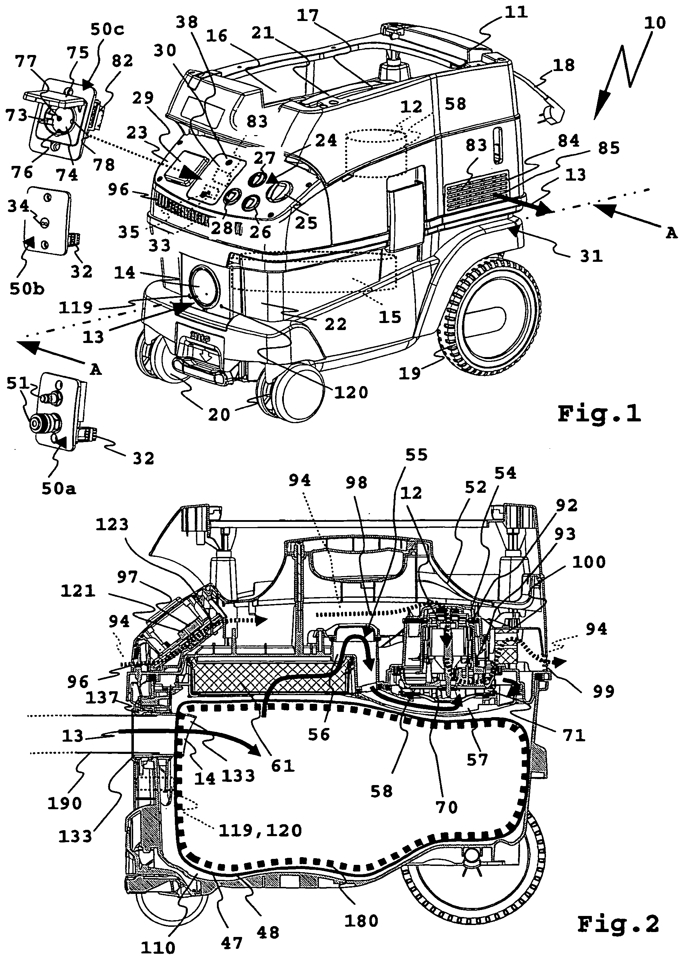

Ein Sensor 121 detektiert einen Füllstand einer Flüssigkeit oder einer sonstigen elektrisch leitfähigen Substanz in dem Sammelraum 110 und generiert in Abhängigkeit davon ein Sensorsignal. Der Sensor 121 ist vorzugsweise auf einer Leiterplatte 123 der Steuerungseinrichtung 97 angeordnet. Von einer Außenseite des Saugergehäuses 11 elektrisch abtastbare (siehe Figur 1) Erfassungsteile 119, 120 des Sensors 121 stehen in den Sammelraum 110, mithin also in Innenraum 47 des Sammelgehäuseteils 31, vor. Signalverbindungen zwischen den Erfassungsteilen 119, 120 außerhalb des Sammelraums 110, jedoch elektrisch geschützt und verdeckt am Saugergehäuse 11.

Die Steuerungseinrichtung 97 ist mit den Bedienelementen 24 beeinflussbar. Zweckmäßigerweise ist die Leiterplatte 123 unterhalb der Bedienelemente 24 angeordnet, d.h. unterhalb der Bedienwand 23. Die Steuerungseinrichtung 97 ist mit dem Saugmotor 12, insbesondere dem Motormodul 58 über nicht dargestellte elektrische Leitungen verbunden und steuert diesen.

An der Bedienwand 23 ist eine zweckmäßigerweise in der Art eines Aufnahmeschachtes ausgestaltete, in Figur 1 mit einer Abdeckplatte 38 abgedeckte Modulaufnahme 30 zur wahlweisen Aufnahme von Funktionsmodulen 50a-50c vorgesehen, die elektrische, optische und akustische Funktionen bereitstellen.

Das Funktionsmodul 50a ist z.B. ein Druckluft-Modul zum Anschließen eines Druckluft-Werkzeuges. Das Funktionsmodul 50a hat eine Druckluft-Anschlussanordnung 51 mit Druckluft-Anschlüssen, an die jeweils ein Druckluftschlauch anschließbar ist. Somit kann also eine Druckluftverbindung über die Anschlussanordnung 51 durch das Funktionsmodul 50a durchgeschleift werden, wobei ein Druckluftpfad im Funktionsmodul 50a über einen Druckluftsensor zum Erfassen eines Druckluftstromes führt. Der Druckluftsensor ist über Modulsignalkontakte 32 mit Sauggerät-Signalkontakten 33 elektrisch verbunden, wenn das Funktionsmodul 50a in die Modulaufnahme 30 eingesteckt ist.

Das Funktionsmodul 50b weist einen Bus-Anschluss 34 mit einem Buskontakt 35 zum Anschluss an einen Datenbus 36 des Sauggeräts 10 auf. Ein Buskontakt 35 der Sauggerät-Signalkontakte 33 ist mit dem Funktionsmodul 50b verbindbar.

Das Funktionsmodul 50c weist z.B. einen elektrischen Stromversorgungsanschluss 73 zum Anschluss eines elektrischen Verbrauchers, beispielsweise eines Elektro-Werkzeugs, auf. Der Stromversorgungsanschluss 73 umfasst eine Steckdose 74, vorzugsweise eine Schutzkontaktsteckdose, die mittels eines Deckels 75 verschließbar ist. Kontakte 76, 77 und 78 der Steckdose 74 sind über Leitungen mit Kontakten eines Steckverbinders 82 verbunden. Der Steckverbinder 82 dient zur Herstellung elektrischer Verbindungen zu Versorgungskontakten 83 im Innern der Modulaufnahme 30 des Sauggeräts 10, die z.B. für eine Schutzleiterverbindung, eine Masseverbindung und eine Dauerstrom-Verbindung vorgesehen sind.

Die Steuerungseinrichtung 97, insbesondere die Anordnung der Leiterplatte 123, sowie das damit in Beziehung stehende elektrische Anschlusskonzept, unter anderem zum Anschluss der Funktionsmodule 50a, 50b oder 50c, sind bei dem Sauggerät 10 innovativ und auf erfindungsgemäße Weise gelöst:
Die Leiterplatte 123 bildet einen Bestandteil eines Leiterplattenmoduls 210, auf der elektrische Komponenten 211, beispielsweise ein erster und ein zweiter Mikroprozessor 212, 213, die zweckmäßigerweise über Optokoppler 214, 215 oder sonstige galvanisch trennende Komponenten miteinander kommunizieren, Leistungshalbleiter zur Ansteuerung beispielsweise des Saugmotors 12, zum Beispiel ein Triac 216, an einem Kühlkörper 217 sowie weitere, hier nicht im Detail beschriebene Komponenten, beispielsweise Widerstände, Kondensatoren und dergleichen, angeordnet sind. Die elektrischen Komponenten 211 sind auf einer oberen Flachseite 218 angeordnet. An der Flachseite 218 sowie einer dieser gegenüberliegenden unteren Flachseite 219 der Leiterplatte 123 verlaufen schematisch angedeutete Leiterbahnen 220 zur Verbindung der elektrischen Komponenten 211. Weiterhin sind die Bedienelemente 24 elektrisch und/oder mechanisch mit der Steuerungseinrichtung 97 verbunden. Beispielsweise sind Steuerglieder 221, 222 vorgesehen, zum Beispiel Potentiometer, die beispielsweise mit dem Saugleistungsschalter 26, dem Anpassungsschalter 27 sowie dem Reinigungsschalter 28 mechanisch verbunden sind. Somit kann beispielsweise eine Saugleistung des Saugmotors 12, eine Betriebsart oder dergleichen an der Steuerungseinrichtung 97 vorgewählt werden.

Zur elektrischen Verbindung von Sensoren oder Sensorflächen, zum Beispiel der Erfassungsteile 119, 120, sind an der Leiterplatte 123 Sensoranschlüsse 223 vorgesehen, beispielsweise Pfostenstecker.

Die Sauggerät-Signalkontakte 33 sind mit Leiterplatten-Signalkontakten 224 elektrisch verbunden. Signalanschlüsse 225 dienen zum Anschluss weiterer Sensoren, beispielsweise eines Temperatursensors für den Saugmotor 12, eines Strömungs- oder Drucksensors für den Saugstrom 13 oder dergleichen.

Der erste Mikroprozessor 212 befindet sich auf einem ersten Potentialbereich 226 der Leiterplatte 123 und ist mit den dort befindlichen Komponenten 211 vernetzt, während der zweite Mikroprozessor 213 in einem zweiten Potentialbereich 227 angeordnet ist und mit den dortigen Komponenten 211 verbunden ist, beispielsweise mit den Sensoranschlüssen 223 oder den Signalkontakt-Anschlüssen 224, 225. Der erste Potentialbereich 226 ist mit einem Netzpotential, das über das Anschlusskabel 18 kommt, verbunden, während der zweite Potentialbereich 227 ein im Vergleich zum Potentialbereich 226 niedrigeres elektrisches Potential aufweist, beispielsweise in Höhe von Signalspannungen von 5 bis 12 Volt oder dergleichen. Somit ist ein Berührkontakt seitens eines Bedieners bezüglich des zweiten Potentialbereichs 227 möglich, was zum Beispiel im Bereich der Erfassungsteile 119 oder 120 nicht auszuschließen ist. Durch die Optokoppler 214, 215 ist eine Potentialtrennung zwischen den beiden Potentialbereichen 226, 227 realisiert, so dass der Bediener mit dem im Potentialbereich 226 vorhandenen höheren elektrischen Potential nicht in Berührung kommt.

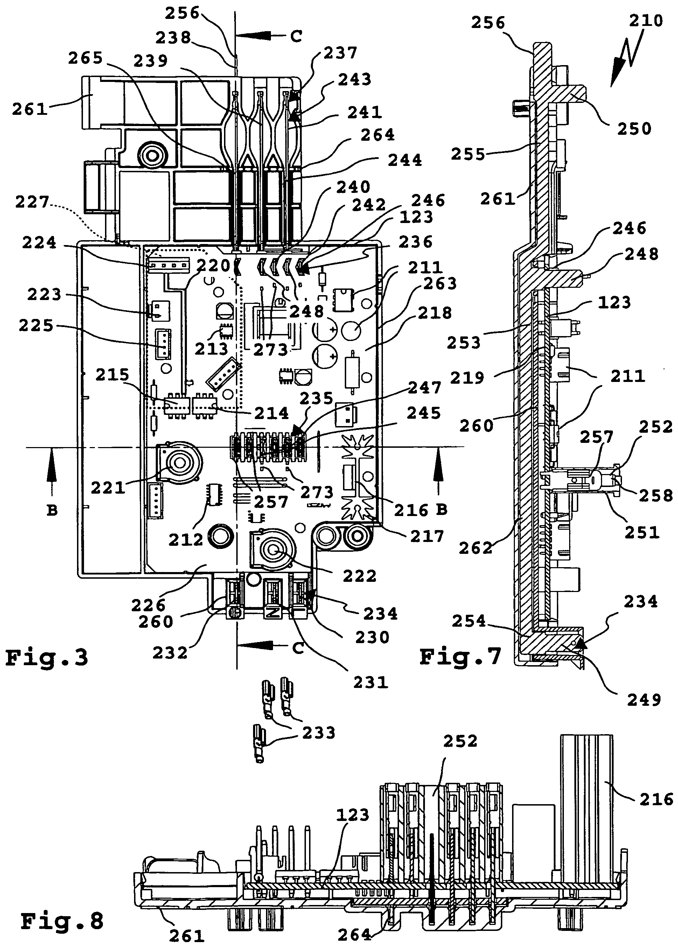

In Figur 3 ist der zweite Potentialbereich 227 in gestrichelten Linien angedeutet. Der übrige Bereich der Leiterplatte 123 ist dem ersten Potentialbereich 226 zugeordnet.

Nicht nur im Hinblick auf eine optimierte Potentialtrennung auf der Leiterplatte 123 ist die elektrische Beschaltung und Verdrahtung bei dem Sauggerät 10, insbesondere dessen Steuerungseinrichtung 97, optimal, sondern auch im Hinblick auf das übrige Verdrahtungs- und Anschlusskonzept.

Über das Anschlusskabel 18 kommen beispielsweise ein Netzpotential 230, ein Massepotential 231 sowie ein Schutzleiterpotential 232, die über eine nicht dargestellte Verbindungsleitung sowie über Steckverbinder 233 an eine Steckanschlussanordnung 234 des Leiterplattenmoduls 210 angeschlossen sind. Die Steckanschlussanordnung 234 ist elektrisch mit weiteren mehrpoligen Steckanschlussanordnungen 235 zum elektrischen Anschluss des Schalters 25 des Hauptschalters, zum elektrischen Anschluss des Funktionsmoduls 50c sowie einer Steckanschlussanordnung 237 zur Verbindung mit der Steckdose 29 verbunden. Dazu sind Leitkörper 238-242 einer Leitkörperanordnung 243 vorgesehen, die an der unteren Flachseite 219 der Leiterplatte 123 entlang verlaufen. Die Leitkörper 238-242 haben eine Flachgestalt. Ihre Schmalseiten 244 sind der unteren Flachseite 219 zugewandt.

An den Schmalseiten 244 stehen bei den Leitkörpern 238-242 Kontaktvorsprünge vor, nämlich die Leiterplatte 123 an Kontaktöffnungen 245, 246 durchdringende Leiterplatten-Kontaktvorsprünge 247, 248, die Bestandteile der Steckanschlussanordnungen 235, 236 bilden, sowie Leitkörper-Steckanschlüsse 249, 250, die Bestandteile der Steckanschlussanordnungen 234, 237 bilden.

Die die Leiterplatte 123 durchdringenden Leiterplatten-Kontaktvorsprünge 247, 248 sowie die Leitkörper-Steckanschlüsse 249, 250 sind als Steckvorsprünge ausgestaltet, die jeweils vor die obere Flachseite 218 der Leiterplatte 123 vorstehen. Dort stehen sie zur Kontaktierung durch einen jeweiligen, insbesondere mehrpoligen Steckverbinder bereit, beispielsweise einen mehrpoligen Steckverbinder 251, der auf die Steckanschlussanordnung 235 aufgesteckt ist. Der Steckverbinder 251 weist in seinem Inneren mehrere den Steckverbindern 233 entsprechende Anschlussbuchsen oder Steckanschlüsse 257 auf, die vorzugsweise in einem Steckergehäuse 252 angeordnet sind. Die Leiterplatten-Kontaktvorsprünge 247, 248 stehen nach oben vor Leitkörper-Verbindungsabschnitte 253 der Leitkörper 238-242 vor, die entlang der unteren Flachseite 219 der Leiterplatte 123 verlaufen. Vor die Leiterplatte 123 stehen Anschlussabschnitte 254, 255 der Leitkörper 238-242 vor, an denen die Steckanschlüsse 249, 250 vorgesehen sind. Die Steckanschlüsse 249, 250 stehen zur selben Seite wie die Kontaktvorsprünge 247, 248 vor, wobei es durchaus möglich ist, dass Kontaktvorsprünge und/oder Steckanschlüsse bei erfindungsgemäß verwendeten Leitkörpern an unterschiedlichen Seiten, insbesondere entgegengesetzte Seiten, vorstehen. So steht beispielsweise beim Leitkörper 238 ein Steckanschluss 256 in dessen Längserstreckungsrichtung nach vorn vor, das heißt quer zu den Leitkörper-Steckanschlüssen 250. Der Steckanschluss 256 dient zum Anschluss einer Steckverbinderbuchse in der Art der Steckverbinder 233, um eine elektrische Verbindung zu dem Erdungskontakt 137 am Saugrohranschluss 133 herzustellen.

Sämtliche elektrischen Kontakte der Steckanschlussanordnungen 234, 236, 237 sind durch Kontaktvorsprünge der Leitkörperanordnung 243 realisiert. Bei der Steckanschlussanordnung 235, die für das Funktionsmodul 50c vorgesehen ist, sind noch zwei weitere elektrische Steckverbinder beziehungsweise elektrische Steckanschlüsse 257 vorhanden, die ausschließlich in elektrischer Verbindung mit der Leiterplatte 123 stehen.

Durch wahlweise Bestückung von Aufnahmekammern des Steckergehäuses 252 mit Steckbuchsen 258 und an diese jeweils angeschlossene elektrische Leitungen ist es beispielsweise möglich, unterschiedliche Verdrahtungsvarianten zu realisieren, ohne Modifikationen am Leiterplattenmodul 210 vorzunehmen. Eine solche Vorgehensweise ist selbstverständlich auch bezüglich der anderen Steckanschlussanordnungen 234, 236, 237 möglich, an die je nach Bedarf, beispielsweise für unterschiedliche Ländervarianten, unterschiedliche Anschlussleitungen beziehungsweise Steckverbinder angeschlossen werden können. Die beiden Steckanschlüsse 257, die ausschließlich mit der Leiterplatte 123 verbunden sind, ermöglichen beispielsweise eine Erfassung eines über die Steckdose 74 fließenden Stromes, so dass die Steuerungseinrichtung 97 den Saugmotor 12 bei fließendem Strom, das heißt bei einem an das Sauggerät 10 angeschlossenen, laufenden elektrischen Gerät, den Saugmotor 12 einschaltet. Ferner ist es möglich, dass die Steckdose 74 schaltbar ausgestaltet ist, so dass sie beispielsweise nur dann Strom liefert, wenn der Schalter 25 in Betriebsstellung geschaltet ist.

Die Leitkörper 238-242 haben Leiterquerschnitte, die größer sind als die Leiterquerschnitte der Leiterbahnen 220, so dass sie größere Ströme leiten können. Dies ist insbesondere im Hinblick auf den Leitkörper 238, der das Schutzleiterpotential 232 leitet, wesentlich. Der Leitkörper 238 hat keinen elektrischen Kontakt zu der Leiterplatte 123 beziehungsweise den darauf angeordneten Leiterbahnen 220 oder elektrischen Komponenten 211. Der Leitkörper 238 durchdringt die Leiterplatte 123 lediglich im Bereich der Steckanschlussanordnung 236 mit einem Leitkörper-Kontaktvorsprung 248. Unterhalb der etwa im Bereich einer Längsmitte der Leiterplatte 123 angeordneten Steckanschlussanordnung 235 ist jedoch kein elektrischer Kontakt zur Leiterplatte 123 und insbesondere nicht zur Steckanschlussanordnung 235 vorhanden. Dies ist durch das erfindungsgemäße Konzept möglich.

Allein schon durch einen Isolationsabstand zwischen der unteren Flachsseite 219 und dem Leitkörper 238 ist eine elektrische Isolation, insbesondere im Bereich der Steckanschlussanordnung 235, realisiert. Zudem ist noch zwischen der Leiterplatte 123 und der Leitkörperanordnung 243 ein im Wesentlichen plattenartiger Zwischenkörper 260 angeordnet, der zweckmäßigerweise elektrisch isolierend ist. Der Zwischenkörper 260 besteht beispielsweise aus Kunststoffmaterial und erstreckt sich zumindest im Bereich der Leitkörperanordnung 243 unterhalb der Leiterplatte 123. Unterhalb des Zwischenkörpers 260 ist sozusagen als Boden oder Basis ein Bodenkörper 261 angeordnet. Die Leiterplatte 123, der Zwischenkörper 260, die Leitkörperanordnung 243 sowie schließlich der Bodenkörper 261 bilden die wesentlichen Komponenten des Leiterplattenmoduls 210. Diese Komponenten sind zweckmäßigerweise insgesamt vergossen, was sowohl in mechanischer Hinsicht als auch in elektrisch isolierender Hinsicht vorteilhaft ist.

Die Leiterplatte 123, der Zwischenkörper 260 sowie die darunter verlaufenden Leitkörper-Verbindungsabschnitte 253 der Leitkörper 238-242 sind in einer Wanne oder einem Wannenbereich 262 des Bodenkörpers 261 aufgenommen. Entlang der Schmalseiten der Leiterplatte 123 erstreckt sich eine Umfangswand 263 des Bodenkörpers 261. Insbesondere der Wannenbereich 262 eignet sich zu einer Verfüllung mit einer Vergussmasse, was das Leiterplattenmodul 210 mechanisch stabilisiert und elektrisch isoliert.

Bezüglich der Längserstreckungsrichtung der Leitkörper 238-242 ist neben dem Wannenbereich 262 ein Anschlussbereich 264 des Basis- oder Bodenkörpers 261 angeordnet, der mit dem Wannenbereich 262 einstückig ist und die Anschlussabschnitte 255 der Leitkörper 238, 239 und 241 aufnimmt. Für diese sind Leitkörper-Aufnahmen 265 vorgesehen. Die Leitkörper 238, 239, 241 liegen mit ihren Flachseiten an Innenwänden der Leitkörper-Aufnahmen 265 im Wesentlichen flächig an, so dass sie einen festen Halt haben. Zudem haben die Leitkörper-Aufnahmen 265 Steckaufnahmen 266 an ihren vom Wannenbereich 262 abgewandten Endbereichen, in die Steckenden 267 der Leitkörper 239, 241 einsteckbar beziehungsweise der Steckanschluss 256 durchsteckbar ist. Der Steckanschluss 256 steht nach vorn vor eine Stirnwand des Leiterplattenmoduls 210 vor.

Die Leitkörper-Aufnahmen 265 erstrecken sich auch in den Wannenbereich 262 hinein. Die dem Leitkörper 238 zugeordnete Leitkörper-Aufnahme 265 verläuft abseits der Leitkörper-Aufnahmen 265 für die Leitkörper 239-242 und ist in der Art einer Aufnahmenut realisiert. Somit ist eine optimale elektrische Isolation des Schutzleiterpotentials 232 realisiert.

Die Leitkörper-Aufnahmen 265 für die Leitkörper 239-242 haben einen gemeinsamen, muldenartigen Aufnahmebereich 268. In dem Aufnahmebereich 268 des Bodenkörpers 261 verlaufen die Leitkörper-Verbindungsabschnitte der Leitkörper 239-242 parallel nebeneinander, sind jedoch durch Trennstege 269 voneinander getrennt. Bezüglich einer Längserstreckungsrichtung der Leitkörper 239-242 sind mehrere Trennstege 269 vorgesehen, die jeweils einen Aufnahmeschlitz oder eine Aufnahmenut für den jeweiligen Leitkörper 239-242 aufweisen.

Zwischen die Trennstege 269 passen jeweils in Längserstreckungsrichtung der Leitkörper 238-242 hintereinander angeordnete Gruppen von Haltevorsprüngen 270 am Zwischenkörper 260. Zwischen jeweils zwei quer zur Längserstreckungsrichtung der Leitkörper angeordneten Haltevorsprüngen 270 ist eine Leitkörper-Aufnahme 271 für den jeweiligen Leitkörper 239-242 gebildet.

Die Haltevorsprünge 270 passen also komplementär zwischen die Trennstege 269 des Aufnahmebereichs 268, was einen optimalen Halt der Leitkörper 239-242 zwischen dem Bodenkörper 261 und dem Zwischenkörper 260 ermöglicht.

Es versteht sich, dass der Zwischenkörper 260 Durchbrüche oder Öffnungen zum Durchstecken der Leiterplatten-Kontaktvorsprünge 247, 248 aufweist.

Eine fehlerfreie Montage der Leitkörper 238-242 am Leiterplattenmodul 210 wird beispielsweise durch eine geometrische Ausgestaltung, die für die Leitkörper 238-242 individuell sein kann, realisiert. Dadurch ist eine Art mechanische Kodierung, die zur fehlerfreien Montage beiträgt, vorhanden. Hierbei ist festzuhalten, dass beispielsweise die Leitkörper 240, 242 und 239, 241 jeweils konturgleich sind, was die Teilevielfalt reduziert.

Zudem sind mechanische Kodierungen 272, beispielsweise Vorsprünge, vorgesehen, die zum Eingriff in korrespondierende Kodieraufnahmen 273 an der Leiterplatte 123 vorgesehen sind.

Die geometrische Ausgestaltung der Leitkörper-Aufnahmen 265, 271 sowie die Kodierungen 272 und die Kodieraufnahmen 273 erlauben somit eine polrichtige und insbesondere fehlerfreie Montage der Leitkörper 238-242 am Leiterplattenmodul 210. Trotz der dadurch bedingten geringen mechanischen Spielräume bei der Montage ist es möglich, die Leiterplatten-Kontaktvorsprünge 247, 248 mit geringem Aufwand in die Kontaktöffnungen 245, 246 einzustecken, wo sie mit geringem Spiel aufgenommen sind. Die Kontaktöffnungen 245, 246 haben eine im Wesentlichen dreieckförmige Gestalt. Ein den Schrägseiten 275 gegenüberliegender Vorsprung 274 der Kontaktöffnungen 245, 246 liegt an einer Flachseite eines jeweiligen Leiterplatten-Kontaktvorsprungs 247, 248 an, während Randbereiche der entgegengesetzten Flachseite der Kontaktvorsprünge 247, 248 punktförmig oder linienförmig an den Schrägseiten 275 anliegen.

Die Steckanschlüsse 249 der Steckanschlussanordnung 234 sind von Isolationskörpern 276 umgeben, die insgesamt ein Steckverbindergehäuse 277 bilden. Die Steckanschlüsse 249 sind durch die Isolationskörper 276 eingehaust, so dass sie elektrisch isoliert sind. Die Isolationskörper 276 beziehungsweise das Steckverbindergehäuse 277 ist einstückig an den Zwischenkörper 260 angeformt und stehen nach oben vor einen Plattenabschnitt 278 des Zwischenkörpers 260 vor. Das Steckverbindergehäuse 277 steht auch nach oben vor die obere Flachseite 218 der Leiterplatte 123 vor.

Der Mikroprozessor 212 und der Mikroprozessor 213 kommunizieren über den Datenbus 36 miteinander. Dadurch ist die Anzahl erforderlicher Leitungen zwischen den galvanisch getrennten Potentialbereichen 226, 227 gering. Dem ersten Potentialbereich 226 ist ein Primärbusabschnitt 281 des Datenbusses 36 zugeordnet, während auf dem zweiten Potentialbereich 227 ein Sekundärbusabschnitt 282 des Datenbusses 36 verläuft. Die Busabschnitte 281, 282 sind durch Übertragungsmittel 280 miteinander gekoppelt. Die Übertragungsmittel 280 realisieren eine galvanische Trennung. Die beiden Optokoppler 214, 215 bilden eine erste und eine zweite Übertragungseinrichtung 283, 284 zur Übertragung von Busdaten vom Primärbusabschnitt 281 auf den Sekundärbusabschnitt 282 und umgekehrt. Die Optokoppler 214, 215 bewirken eine galvanische Trennung des Datenbusses 36 in die beiden Busabschnitte 281, 282. Es versteht sich, dass anstelle eines oder beider Optokoppler 214, 215 auch ein magnetischer Übertrager möglich ist.

Die beiden Mikroprozessoren 212, 213 haben unterschiedliche Aufgaben. Der erste Mikroprozessor 212 steuert beispielsweise den Leistungshalbleiter oder Triac 216 an, beispielsweise über einen Steuerausgang 285. Der Mikroprozessor 212 hat weitere Eingänge und Ausgänge 286, beispielsweise für eine Drehzahlüberwachung des Saugmotors, eine Spannungssynchronisation, zur Ansteuerung eines akustischen Signalmittels oder dergleichen. Weitere Ein- und Ausgänge sind zum unmittelbaren Anschluss an den Primärbusabschnitt 281 des Datenbusses 36 vorgesehen, nämlich ein Busausgang 287 und ein Buseingang 288. Somit ist der Datenbus 36 unmittelbar auf den Mikroprozessor 212 aufgelegt, der die Buskommunikation direkt bewältigt. Eine zusätzliche Kommunikationseinrichtung ist nicht notwendig. Der Mikroprozessor 212 bildet eine erste Kommunikationseinrichtung 289.

Auch der zweite Mikroprozessor 213 bildet unmittelbar eine Kommunikationseinrichtung, nämlich eine zweite Kommunikationseinrichtung 290, die an den Sekundärbusabschnitt 282 und somit an den Datenbus 36 angeschlossen ist. Der zweite Mikroprozessor 213 weist neben Ein- und Ausgängen 291, die zum Beispiel zum Anschluss der Erfassungsteile 119, 120, zum Anschluss eines Temperatursensors, zum Anschluss eines Sensors in einem der Funktionsmodule 50a-50c oder dergleichen, vorgesehen sind, einen Busein-/-ausgang 292 auf, der mit dem Sekundärbusabschnitt 282 verbunden ist. Der Busein-/-ausgang 292 ist für eine bidirektionale Kommunikation ausgestaltet, das heißt, der Mikroprozessor 213 empfängt und sendet Daten auf einem einzigen Busein-/-ausgang 292. Der Sekundärbusabschnitt 282 ist als ein Eindrahtbus ausgestaltet, der nur eine einzige Busleitung 293 aufweist.

Die Busleitung 293, die zur bidirektionalen Kommunikation vorgesehen ist, ist über einen oder mehrere Pull-up-Widerstände 294 mit einem oberen Potentialniveau, beispielsweise 5 Volt, verbunden. Korrespondierend dazu ist eine mit dem Busausgang 287 verbundene Busleitung 295 über einen Pullup-Widerstand 297 und eine mit dem Buseingang 288 über einen Widerstand 299 verbundene Busleitung 296 über einen Pull-up-Widerstand 298 mit einem Massepotential verbunden. Die Busleitung 295 ist mit einem Sendeeingang des Optokopplers 214 verbunden, die Busleitung 296 mit einem zur Übertragung empfangener Daten vorgesehenen Ausgang des Optokopplers 215. Dadurch, dass die beiden Kommunikationseinrichtungen 289, 290 mit voneinander separaten Busanschlüssen 287, 288 des Mikroprozessors 212 beziehungsweise der Kommunikationseinrichtung 289 verbunden sind, wird eine Rückkopplung vermieden.

Auf der Seite des Sekundärbusabschnittes 282 ist dies nicht erforderlich. Allerdings ist dort am Eingang der zweiten Kommunikationseinrichtung, das heißt des Optokopplers 215, eine Verstärkerschaltung 300 mit einem Transistor 301 vorgesehen. Es versteht sich, dass die Verstärkerschaltung 300 nur exemplarisch zu verstehen ist und auch anders realisiert werden kann oder auch ganz entfallen kann, beispielsweise wenn eingangsseitig an der zweiten Kommunikationseinrichtung 290 eine geringere Spannung ausreichend ist.

Die Ausgestaltung des Sekundärbusabschnittes 282 als echten Eindrahtbus, bei dem eine einzige Busleitung 293 ausreichend ist, ermöglicht den einfachen Anschluss weiterer Kommunikationseinrichtungen, die beispielsweise Bestandteil des Sauggerätes 10 bilden können oder - in einer bevorzugten Ausgestaltung der Erfindung - auch als separate Baueinheiten ausgestaltet sein können. So ist beispielsweise der Buskontakt 35 über eine Schutzbeschaltung 302 unmittelbar mit dem Sekundärbusabschnitt 282, somit also mit dem Datenbus 36 verbunden. Der Buskontakt 35 bildet daher eine Schnittstelle 303 zum Anschluss einer von der Maschine 10 separaten Kommunikationseinrichtung 304, beispielsweise eines Diagnose-Computers, einer Anzeigeeinrichtung oder dergleichen. Somit kann beispielsweise ein Funktionsmodul realisiert sein, das unmittelbar an den Datenbus 36 angekoppelt ist. Ein solches Funktionsmodul, das im Wesentlichen konturgleich mit den Funktionsmodulen 50a-50c sein kann, dient beispielsweise zur Ausgabe von Daten, die auf dem Datenbus 36 kommuniziert werden, beispielsweise Sensorsignale, Störungsmeldungen und dergleichen.

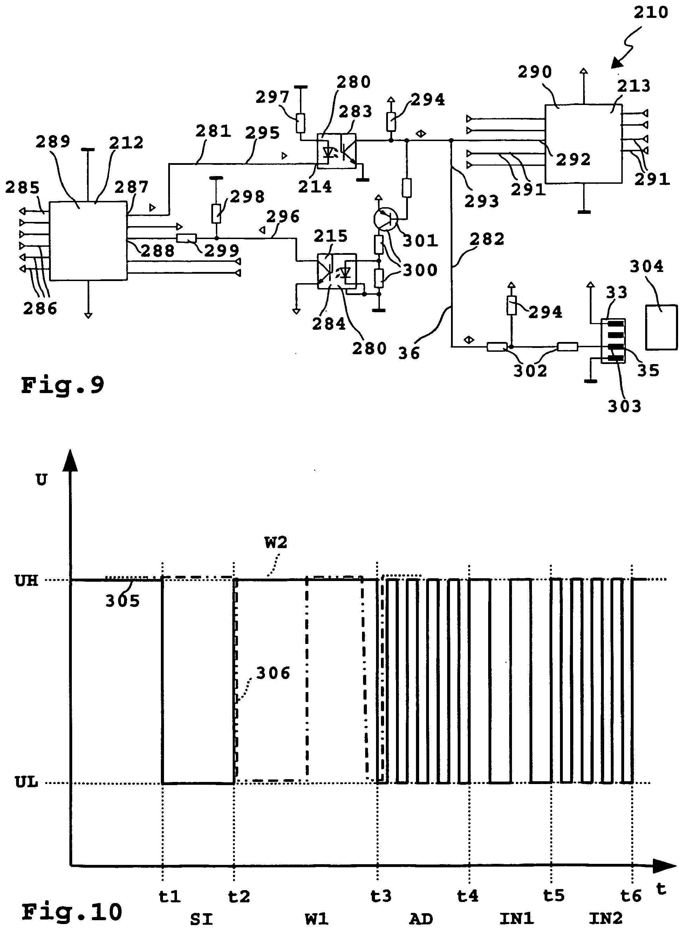

Auf dem Datenbus 36 ist eine konkurrierende Kommunikation mehrerer Kommunikationseinrichtungen, beispielsweise der Kommunikationseinrichtungen 289, 290 und 304, ohne weiteres möglich. Die Kommunikationseinrichtungen 289, 290, 304 kommunizieren mit unterschiedlichen Prioritäten auf dem Datenbus 36. Eine beispielhafte Kommunikation ist in Figur 10 dargestellt.

Beispielsweise sendet die zweite Kommunikationseinrichtung 290 eine Busnachricht 305 auf dem Datenbus 36. Die Busnachricht 305 beginnt mit einem Startimpuls SI. Dabei senkt die Kommunikationseinrichtung 290 ein Potential U auf dem Datenbus 36 von einem hohen Ruhepotential UH auf ein niedrigeres Sendepotential UL. Dabei ist festzuhalten, dass der Datenbus 36 als Offener-Kollektor-Bus ausgeführt ist. Mit dem Startimpuls SI signalisiert die Kommunikationseinrichtung 290 zum Zeitpunkt t1 den Wunsch, eine Busnachricht zu versenden. Zu einem Zeitpunkt t2 endet der Startimpuls und beginnt eine Wartephase W1, innerhalb derer die Kommunikationseinrichtung 290 auf Sendewünsche anderer Busteilnehmer des Datenbusses 36 wartet. Dies könnte beispielsweise eine Busnachricht 306 sein, deren Wartephase W2 kürzer ist als die Wartephase W1. Die im Vergleich zur Wartephase W1 kürzere Wartephase W2 signalisiert, dass die Busnachricht 306 eine höhere Priorität hat als die Busnachricht 305. In diesem Fall würde die Kommunikationseinrichtung 290 das weitere Senden der Busnachricht 305 unterlassen und der Busnachricht 306 den Vorrang geben.

Nachfolgend wird jedoch die Busnachricht 305 weiter beschrieben: Zu einem Zeitpunkt t3 beginnt eine Adressinformation AD, die beispielsweise die Art der Nachricht und/oder den Sender der Nachricht und/oder den Inhalt der Nachricht betrifft. Daran schließen sich zu Zeitpunkten t4 und t5 Informationsteile IN1, IN2 an, die beispielsweise vier oder acht Datenbits enthalten. Busnachrichten auf dem Datenbus 36 können variable Längen aufweisen, das heißt beispielsweise, dass nur der Informationsteil IN1 übertragen wird oder sich an den Informationsteil IN2 weitere, nicht dargestellte Informationsteile anschließen.

## Patentansprüche

1. Portable elektrische Maschine, in Gestalt einer Hand-Werkzeugmaschine oder eines Sauggeräts (10), mit einer Steuerungseinrichtung zur Steuerung mindestens einer Komponente der Maschine, insbesondere eines elektrischen Motors, wobei die Steuerungseinrichtung (97) Bus-Kommunikationsmittel zur Kommunikation auf einem Datenbus (36) aufweist und mit mindestens einem elektrischen Potential elektrisch verbunden ist, **dadurch gekennzeichnet, dass** die Steuerungseinrichtung (97) einen ersten Potentialbereich (226) und einen zweiten, von dem ersten Potentialbereich (226) galvanisch getrennten zweiten Potentialbereich (227) aufweist, und dass die Bus-Kommunikationsmittel eine erste, dem ersten Potentialbereich (226) zugeordnete Kommunikationseinrichtung (289) und mindestens eine zweite, dem zweiten Potentialbereich (227) zugeordnete und von der ersten Kommunikationseinrichtung (289) galvanisch getrennte Kommunikationseinrichtung (290) zur Kommunikation über den Datenbus (36) aufweist, und dass der Datenbus (36) zwischen der ersten Kommunikationseinrichtung (289) und der mindestens einen zweiten Kommunikationseinrichtung (290) über Übertragungsmittel (280) geführt ist, die den Datenbus (36) in einen dem ersten Potentialbereich (226) zugeordneten Primärbusabschnitt (281) und einen dem zweiten Potentialbereich (227) zugeordneten Sekundärbusabschnitt (282) galvanisch trennen.

2. Portable elektrische Maschine nach Anspruch 1, **dadurch gekennzeichnet, dass** der Primärbusabschnitt (281) und/oder der Sekundärbusabschnitt (282) als Eindrahtbus ausgestaltet sind, wobei der Eindrahtbus zweckmäßigerweise für eine bidirektionale Übertragung ausgestaltet ist.

3. Portable elektrische Maschine nach einem der vorhergehenden Ansprüche, **dadurch gekennzeichnet, dass** die Übertragungsmittel (280) für jede Übertragungsrichtung eine separate Übertragungseinrichtung (283, 284) aufweisen und/oder dass die Übertragungsmittel (280) mindestens einen Optokoppler (214, 215) und/oder mindestens einen magnetischen Übertrager aufweisen.

4. Portable elektrische Maschine nach einem der vorhergehenden Ansprüche, **dadurch gekennzeichnet, dass** eine erste Übertragungseinrichtung (283) der Übertragungsmittel (280) an einen Ausgang (287) und eine zweite Übertragungseinrichtung (284) an einen von dem Ausgang (287) separaten Eingang (288) der ersten Kommunikationseinrichtung (289) zur Vermeidung einer Rückkopplung angeschlossen sind.

5. Portable elektrische Maschine nach Anspruch 4, **dadurch gekennzeichnet, dass** die erste Übertragungseinrichtung (283) und die zweite Übertragungseinrichtung (284) auf dem Sekundärbusabschnitt (282) miteinander verbunden sind.

6. Portable elektrische Maschine nach einem der vorhergehenden Ansprüche, **dadurch gekennzeichnet, dass** an den Primärbusabschnitt (281) und/oder den Sekundärbusabschnitt (282) mindestens eine dritte Kommunikationseinrichtung (304) angeschlossen oder anschließbar ist.

7. Portable elektrische Maschine nach einem der vorhergehenden Ansprüche, **dadurch gekennzeichnet, dass** die Steuerungseinrichtung (97) eine Schnittstelle (303) zum Anschluss einer von der portablen elektrischen Maschine separaten Kommunikationseinrichtung (304), insbesondere einer Anzeigeeinrichtung und/oder einer Diagnoseeinrichtung, aufweist.

8. Portable elektrische Maschine nach einem der vorhergehenden Ansprüche, **dadurch gekennzeichnet, dass** die erste und/oder die mindestens eine zweite Kommunikationseinrichtung (290) unmittelbar durch einen Mikroprozessor (212, 213) gebildet sind, wobei der Mikroprozessor (212, 213) zweckmäßigerweise zur Ansteuerung der mindestens einer Komponente der Maschine und/oder vorteilhaft zur Verarbeitung mindestens eines Sensorsignals ausgestaltet ist.

9. Portable elektrische Maschine nach einem der vorhergehenden Ansprüche, **dadurch gekennzeichnet, dass** der Primärbusabschnitt (281) und/oder der Sekundärbusabschnitt (282) als Offene-Kollektor-Busse ausgestaltet sind.

10. Portable elektrische Maschine nach einem der vorhergehenden Ansprüche, **dadurch gekennzeichnet, dass** der erste Potentialbereich (226) und der zweite Potentialbereich (227) auf einer einzigen Leiterplatte (123) angeordnet sind.

11. Portable elektrische Maschine nach einem der vorhergehenden Ansprüche, **dadurch gekennzeichnet, dass** eine den ersten Potentialbereich (226) und/oder den zweiten Potentialbereich (227) aufweisende Leiterplatte (123) einen Bestandteil eines Leiterplattenmoduls (210) bildet, bei der an einer vorzugsweise elektrische Komponenten (211) der Steuerungseinrichtung (97) aufweisenden Flachseite (218) oder einer dieser entgegengesetzten Flachseite (219) eine Leitkörperanordnung (243) mit mindestens einem von der Leiterplatte (123) separaten Leitkörper (238-242) angeordnet ist, wobei zweckmäßigerweise zwischen dem mindestens einen Leitkörper (238-242) und der Leiterplatte (123) ein insbesondere plattenförmiger Zwischenkörper (260) und/oder vorteilhaft an einer von der Leiterplatte (123) abgewandten Seite des mindestens einen Leitkörpers (238-242) ein insbesondere plattenförmiger oder wannenartiger Bodenkörper (261) angeordnet ist.

12. Portable elektrische Maschine nach einem der vorhergehenden Ansprüche, **dadurch gekennzeichnet, dass** der erste Potentialbereich (226) einem Netzpotential (230) eines Wechselspannungsnetzes und der zweite Potentialbereich (227) einem gegenüber dem Netzpotential (230) niedrigeren, insbesondere einem Berührpotential, zugeordnet sind.

13. Portable elektrische Maschine nach einem der vorhergehenden Ansprüche, **dadurch gekennzeichnet, dass** die Kommunikationseinrichtungen (289, 290) zur Kommunikation auf dem Datenbus (36) nach einem eine Busnachricht (305, 306) ankündigenden Startsignal eine Wartephase (W1, W2) warten, innerhalb derer eine jeweils andere Kommunikationseinrichtung (289, 290) mit dem Senden einer Busnachricht (305, 306) beginnen kann, wobei zweckmäßigerweise der Wartephase (W1, W2) ein Empfangspegel zugeordnet ist und/oder vorteilhaft eine Länge der Wartephase (W1, W2) einer Kommunikationseinrichtung (289) von deren Sende-Priorität abhängt.

14. Portable elektrische Maschine nach einem der vorhergehenden Ansprüche, **dadurch gekennzeichnet, dass** die Kommunikationseinrichtungen (289, 290) auf dem Datenbus (36) mittels einer einen Takt integral enthaltenden Sendekodierung, insbesondere einer Manchestercodierung, senden und/oder dass die Kommunikationseinrichtungen (289, 290) auf dem Datenbus (36) mit Busnachrichten (305, 306) variabler Länge kommunizieren.

## Claims

1. Portable electrical machine n the form of a hand-operated power tool or a suction device (10), with a control unit for controlling at least one component of the machine, in particular an electric motor, wherein the control unit (97) has bus communication means for communication on a data bus (36) and is electrically connected to at least one electrical potential, **characterised in that** the control unit (97) has a first potential section (226), and a second potential section (227) electrically isolated from the first potential section (226), and that the bus communication means have a first communication device (289) assigned to the first potential section (226), and at least one second communication device (290) assigned to the second potential section (227) and electrically isolated from the first communication device (289), for communication over the data bus (36), and that the data bus (36) is guided between the first communication device (289) and the second communication device or devices (290) via transmission means (280) which electrically isolate the data bus (36) into a primary bus section (281) assigned to the first potential section (226) and a secondary bus section (282) assigned to the second potential section (227).

2. Portable electrical machine according to claim 1, **characterised in that** the primary bus section (281) and/or the secondary bus section (282) are or is designed as a single-wire bus, wherein the single-wire bus is designed expediently for bidirectional transmission.

3. Portable electrical machine according to any of the preceding claims, **characterised in that** the transmission means (280) for each transmission device have a separate transmission device (283. 284) and/or that the transmission means (280) have at least one optocoupler (214, 215) and/or at least one magnetic transformer.

4. Portable electrical machine according to any of the preceding claims, **characterised in that** a first transmission device (283) of the transmission means (280) is connected to an output (287) and a second transmission device (284) to an input (288) of the first communication device (289), to avoid any back-coupling.

5. Portable electrical machine according to claim 4, **characterised in that** the first transmission device (283) and the second transmission device (284) are connected to one another on the secondary bus section (282).

6. Portable electrical machine according to any of the preceding claims, **characterised in that** at least one communication device (304) is or may be connected to the primary bus section (281) and/or the secondary bus section (282).

7. Portable electrical machine according to any of the preceding claims, **characterised in that** the control unit (97) has an interface (303) for the connection of a communication device (304) separate from the portable electrical machine, in particular a display device and/or a diagnostic device.

8. Portable electrical machine according to any of the preceding claims, **characterised in that** the first and/or the second communication device or devices (290) are formed by a microprocessor (212, 213), wherein the microprocessor (212, 213) is expediently designed for control of the component or components of the machine and/or advantageously for the processing of at least one sensor signal.

9. Portable electrical machine according to any of the preceding claims, **characterised in that** the primary bus section (281) and/or the secondary bus section (282) are in the form of open collector buses.

10. Portable electrical machine according to any of the preceding claims, **characterised in that** the first potential section (226) and the second potential section (227) are provided on a single circuit board (123).

11. Portable electrical machine according to any of the preceding claims, **characterised in that** a circuit board (123) containing the first potential section (226) and/or the second potential section (227) forms part of a circuit board module (210) on which there is mounted, on a flat side (218) having preferably electrical components (211) of the control unit (97), or a flat side (219) opposite the former, a conductive body arrangement (243) with at least one conductive body (238-242) separate from the circuit board (123), wherein expediently there is provided between the conductive body or bodies (238-242) and the circuit board (123) an intermediate body (260), in particular board-shaped, and/or advantageously on a side of the conductive body or bodies (238-242) facing away from the circuit board (123), a base body (261), in particular board-shaped or trough-like.

12. Portable electrical machine according to any of the preceding claims, **characterised in that** the first potential section (226) is assigned a mains power potential (230) of an a.c. voltage network, and the second potential section (227) is assigned a potential lower than the mains power potential (230), in particular a contact potential.

13. Portable electrical machine according to any of the preceding claims, **characterised in that** the communication devices (289, 290) for communication on the data bus (36) wait for a waiting phase (W1, W2), after a start signal announcing a bus message (305, 306), within which the other respective communication device (289, 290) may commence the sending of a bus message (305, 306), wherein expediently the waiting phase (W1, W2) is assigned a receiving level and/or advantageously a length of the waiting phase (W1, W2) of a communication device (289) depends on its sending priority.

14. Portable electrical machine according to any of the preceding claims, **characterised in that** the communication devices (289, 290) transmit on the data bus (36) by means of a sending code with an integral clock pulse, in particular a Manchester code, and/or that the communication devices (289, 290) communicate on the data bus (36) with bus messages (305, 306) of variable length.

## Revendications

1. Machine électrique transportable revêtant la forme d'une machine à outillage manuel ou d'un appareil d'aspiration (10), présentant un dispositif de commande destiné à commander au moins un composant de ladite machine, en particulier un moteur électrique, ledit dispositif de commande (97) étant muni de moyens de communication par bus, dédiés à la communication sur un bus de données (36), et étant raccordé électriquement à au moins un potentiel électrique, **caractérisée par le fait que** le dispositif de commande (97) comprend une première plage de potentiel (226) et une seconde plage de potentiel (227) séparée galvaniquement d'avec ladite première plage de potentiel (226) ; **par le fait que** les moyens de communication par bus comprennent un premier dispositif de communication (289) associé à la première plage de potentiel (226), et au moins un deuxième dispositif de communication (290) qui est associé à la seconde plage de potentiel (227) et est séparé galvaniquement d'avec ledit premier dispositif de communication (289), en vue de la communication par l'intermédiaire du bus de données (36) ; et **par le fait que** ledit bus de données (36) transite, entre ledit premier dispositif de communication (289) et ledit deuxième dispositif de communication (290) à présence minimale, par des moyens de transmission (280) provoquant le clivage galvanique dudit bus de données (36) en un tronçon de bus (281) primaire, associé à ladite première plage de potentiel (226), et en un tronçon de bus (282) secondaire, associé à ladite seconde plage de potentiel (227).

2. Machine électrique transportable selon la revendication 1, **caractérisée par le fait que** le tronçon de bus (281) primaire et/ou le tronçon de bus (282) secondaire est (sont) réalisé(s) en tant que bus unifilaire, lequel bus unifilaire est commodément conçu en vue d'une transmission bidirectionnelle.

3. Machine électrique transportable selon l'une des revendications précédentes, **caractérisée par le fait que** les moyens de transmission (280) comportent un dispositif de transmission (283, 284) distinct pour chaque direction de transmission ; et/ou **par le fait que** lesdits moyens de transmission (280) présentent au moins un coupleur optique (214, 215) et/ou au moins un transmetteur magnétique.

4. Machine électrique transportable selon l'une des revendications précédentes, **caractérisée par le fait qu'**un premier dispositif de transmission (283) des moyens de transmission (280) est connecté à une sortie (287), et un second dispositif de transmission (284) est connecté à une entrée (288) du premier dispositif de communication (289) qui est distincte de ladite sortie (287), en vue d'éviter une rétroaction.

5. Machine électrique transportable selon la revendication 4, **caractérisée par le fait que** le premier dispositif de transmission (283) et le second dispositif de transmission (284) sont raccordés l'un à l'autre sur le tronçon de bus (282) secondaire.

6. Machine électrique transportable selon l'une des revendications précédentes, **caractérisée par le fait qu'**au moins un troisième dispositif de communication (304) est, ou peut être raccordé au tronçon de bus (281) primaire et/ou au tronçon de bus (282) secondaire.

7. Machine électrique transportable selon l'une des revendications précédentes, **caractérisée par le fait que** le dispositif de commande (97) est pourvu d'un interface (303) affecté au raccordement d'un dispositif de communication (304) distinct de ladite machine électrique transportable, en particulier d'un dispositif d'affichage et/ou d'un dispositif de diagnostic.

8. Machine électrique transportable selon l'une des revendications précédentes, **caractérisée par le fait que** le premier, et/ou le deuxième dispositif de communication (290) à présence minimale, est (sont) directement constitué(s) d'un microprocesseur (212, 213), lequel microprocesseur (212, 213) est commodément dévolu au pilotage du composant de la machine, à présence minimale, et/ou avantageusement dévolu au traitement d'au moins un signal de capteur.

9. Machine électrique transportable selon l'une des revendications précédentes, **caractérisée par le fait que** le tronçon de bus (281) primaire et/ou le tronçon de bus (282) secondaire est (sont) réalisé(s) en tant que bus à collecteur(s) ouvert(s).

10. Machine électrique transportable selon l'une des revendications précédentes, **caractérisée par le fait que** la première plage de potentiel (226) et la seconde plage de potentiel (227) sont situées sur une unique plaquette imprimée (123).

11. Machine électrique transportable selon l'une des revendications précédentes, **caractérisée par le fait qu'**une plaquette imprimée (123), présentant la première plage de potentiel (226) et/ou la seconde plage de potentiel (227), forme un élément constitutif d'un module (210) à plaquette imprimée, machine dans laquelle un ensemble (243) de corps conducteurs, incluant au moins un corps conducteur (238-242) distinct de ladite plaquette imprimée (123), est implanté sur un côté plat (218) préférentiellement muni de composants électriques (211) du dispositif de commande (97), ou sur un côté plat (219) pointant à l'opposé dudit côté, sachant qu'un corps intercalaire (260), notamment en forme de platine, est commodément interposé entre ladite plaquette imprimée (123) et ledit corps conducteur (238-242) à présence minimale ; et/ou qu'un corps de socle (261), notamment en forme de platine ou du type cuvette, est avantageusement placé sur un côté dudit corps conducteur (238-242) à présence minimale qui pointe à l'opposé de ladite plaquette imprimée (123).

12. Machine électrique transportable selon l'une des revendications précédentes, **caractérisée par le fait que** la première plage de potentiel (226) est associée au potentiel (230) d'un réseau de tension alternative, la seconde plage de potentiel (227) étant associée à un potentiel plus faible que ledit potentiel de réseau (230), en particulier à un potentiel de contact.

13. Machine électrique transportable selon l'une des revendications précédentes, **caractérisée par le fait qu'**en vue de la communication sur le bus de données (36), les dispositifs de communication (289, 290) observent, après un signal de départ annonçant un message de bus (305, 306), une phase d'attente (W1, W2) pendant la durée de laquelle un autre dispositif de communication (289, 290) respectif peut commencer l'émission d'un message de bus (305, 306), sachant qu'un niveau de réception est commodément associé à ladite phase d'attente (W1, W2), et/ou qu'une longueur de la phase d'attente (W1, W2) d'un dispositif de communication (289) est avantageusement tributaire de la priorité d'émission de ce dernier.

14. Machine électrique transportable selon l'une des revendications précédentes, **caractérisée par le fait que** les dispositifs de communication (289, 290) émettent, sur le bus de données (36), au moyen d'un codage d'émission renfermant intégralement une cadence d'horloge, notamment d'un codage Manchester ; et/ou **par le fait que** lesdits dispositifs de communication (289, 290) communiquent, sur ledit bus de données (36), par des messages de bus (305, 306) de longueur variable.
